# EUROPEAN PATENT APPLICATION

(11) **EP 0 919 207 A1**
(43) Date of publication of application: **02.06.1999**
(21) Application number: 98830405.1
(22) Date of filing: 02.07.1998
(51) Int. Cl.: A61C 7/10

(54) **Orthodontic expander**

(30) Priority: 27.11.1997 IT FI970259
(71) Applicant: Leone S.p.A., 50019 Sesto Fiorentino (Firenze) (IT)
(72) Inventor: Pozzi, Alessandro, 50134 Firenze (IT)
(74) Representative: Martini, Lazzaro

(57) **Abstract**

The invention refers to an orthodontic expander of a type consisting of an element (2) with variable expansion and having at least two opposite arms (3) which are provided with relevant means for association thereof to the teeth (4) ; the associating means are formed by connection elements (5) able to be interposed between said arms (3) and said teeth (4) and exhibiting a first or inner portion (50) which defines a stable receiving seat (55) for a corresponding end (31) of each of said arms (3) and a second or outer portion (51) provided with a fixing surface (54) which is so shaped as to result associable to said teeth (4) either directly or indirectly through an orthodentic band (6) or other fixing means.

## Description

The present invention refers to an orthodontic expander device.

Such devices are used in orthodontics, for example in case of transverse deficiencies of superior maxilla, to induce a rapid expansion of the palatine suture.

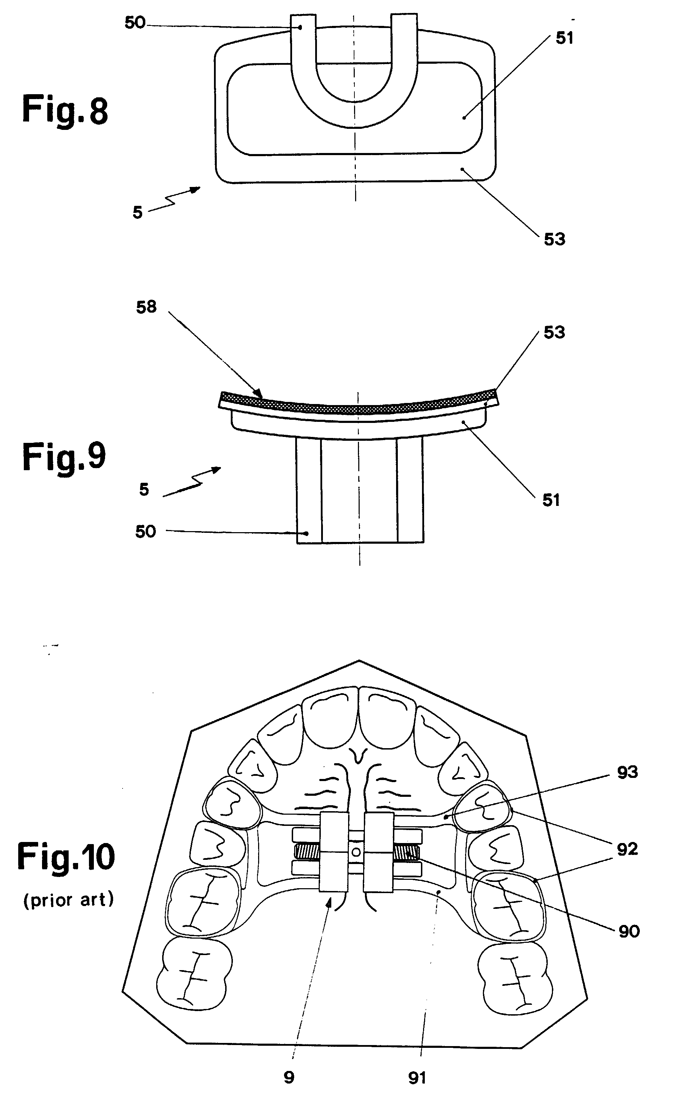

The expanders of known type consist, as in the examplary embodiment shown in Fig. 10, of an element (9) with variable expansion and with screw means (90) which allow the expansion thereof (and which is more commonly called screw in the technical jargon of the orthodontic field) and of a plurality of arms (91) disposed opposite to each other and intended to intercat with corresponding portions of the dental arch.
Currently, the arms (91), in correspondence of their free ends (93), are associated with orthodontic bands (92) by braze welding.

Such operation requires treating the portions of the arms and bands (which are both in stainless steel) with a suitable aggressive composition and then welding these portions together. Upon completion of the braze welding, the welded portions, which may exhibit relatively large amounts of weld material and which, usually, result affected by a diffused flame-induced blackening, must be subjected to a polishing operation to obtain surfaces as smooth as possible in order to prolong the oral hygiene after the application of the expander.

A first drawback of the expanders of known type stems from the relatively complex preparing stage prior to installation in the mouth.
One drawback, that may be of significant importance, concerns the biocompatibility of the expander being braze-welded. In fact, while the parts made in stainless steel exhibit the property of having no biological reactivity when in the mouth, the material used for braze welding (usually made of alloys which include Ag, Cu, Zn, Ni) is likely to be interested by unwanted corrosion phenomena. It is believed, in fact, that the biological compatibility of the orthodontic expander results negatively affected by the release of ions as a consequence of the combined use of stainless steel (causing no problem when used individually) and materials having different elettric potentials.

Moreover, silver alloys, such as those used for braze welding, give rise to corrosion phenomena when placed in saline environments such as the oral one.

One of the objects of the present invention is to overcome the above mentioned drawbacks.

This result has been achieved, according to the invention, by providing an orthodontic expander and/or a connecting element having the characteristics described in the independent claims. Further characteristics being set forth in the dependent claims.

One of the advantages of the present invention is the elimination of the braze welding as a method of connecting the various expander components to each other, and the use instead of connection elements, interposable between the arms of the expander and the teeth, to connect either directly or indirectly the same arms to the teeth is a safe, simple and biologically compatible manner.

These and other advantages and characteristics of the invention will be best understood by anyone skilled in the art from a reading of the following description in conjunction with the attached drawings given as a practical exemplification of the invention, but not to be considered in a limitative sense, wherein:
- Figs. 1 and 2 show a plan view of two exemplary embodiments of an orthodontic expander, according to the present invention, applied to a dental arch;
- Fig. 3 shows a perspective view of an exemplary embodiment of a connection element constructed in accordance with the present invention:
- Figs. 4 and 6 show the connection element of Fig. 3 associated with an arm of an expander, respectively in a front view, with the arm being sectioned, and in a plan view;
- Figs. 5 and 7 show the connection element of Fig. 3 associated with one arm of an expander, respectively in a front view with the arm being represented in section, and in a plan view, and according to different fixing fashions;
- Figs. 8 and 9 show, respectively, a front view and a plan view of a further exemplary embodiment of a connection element according to the present invention:
- Fig. 10 shows a plan view of an orthodontic expander according to the prior art;
- Figs. 11 and 12 show a plan view of two further exemplary embodiments of an orthodontic expander, according to the present invention, applied to a dental arch;
- Figs. 13 and 14 show, respectively, a front view and a plan view of a further exemplary embodiment of a connection element according to the present invention;
- Figs. 15, 16 and 17 show a further exemplary embodiment of the connection element in association with one arm of an expander, respectively in a bottom view, in a front view with the arm being represented in section, and in a plan view.

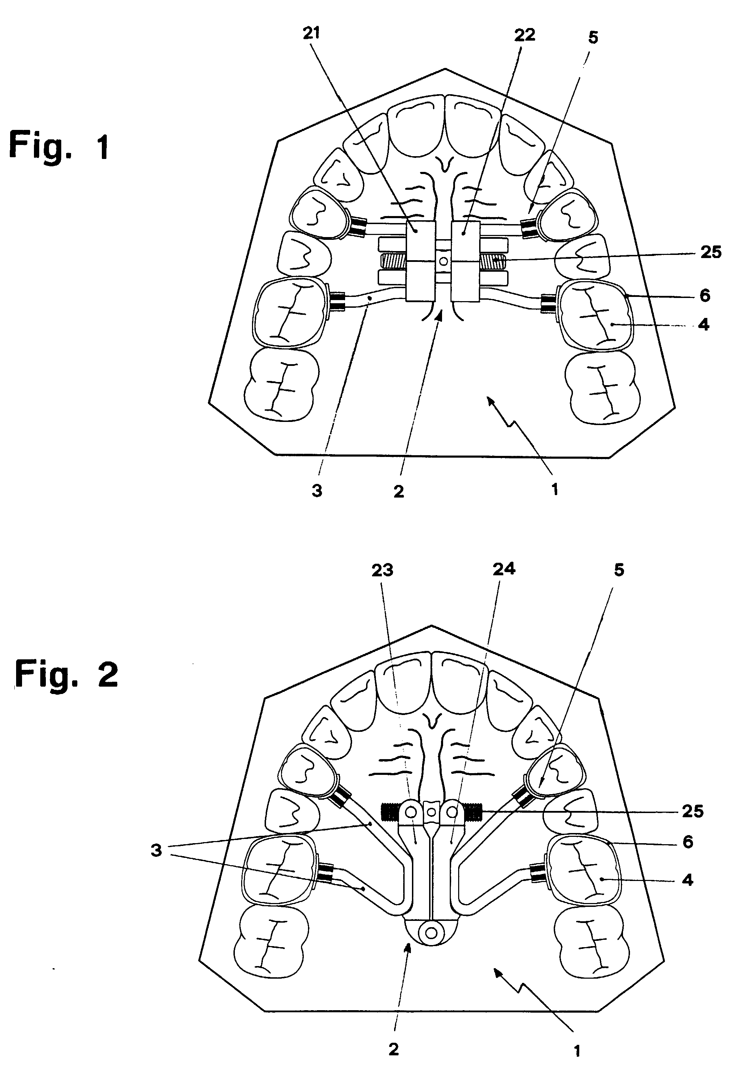

An orthodontic expander (1) constructed according to the present invention is of a type consisting of an element (2) with variable expansion and having at least two opposite arms (3) provided with means for either a direct or indirect association with the teeth. The variably extendable element (2) is formed by two semi-parts which can be moved away from each other by screw means (25) in different ways. For example, the element (2) may be either of a type having two semi-parts (21, 22) disposed to translate parallel to each other (as in the example of Fig. 1) or of a type having two semi-parts (23, 24) hinged to each other nad fan-like stretchable apart (as in the example of Fig. 2). In the present expander (1), the association means are advantageously made up of connection elements (5) interposable between the arms (3) and the teeth (4).

The connection elements (5) are formed by bodies having a first or inner portion (50) provided thereon with a housing seat (55) for a corresponding end (31) of the corresponding arm (3), and a second or outer portion (51) provided with a fixing surface (54) which is so shaped as to result associable to said teeth (4) either directly or indirectly through an orthodentic band (6) or other fixing means.

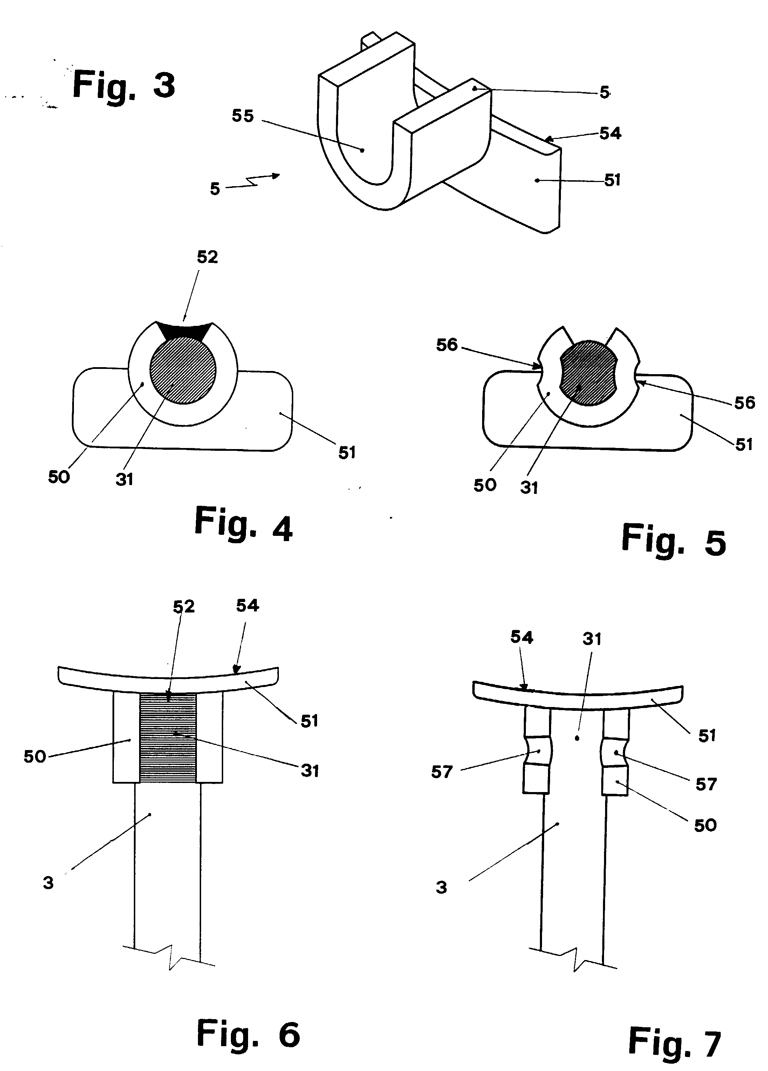

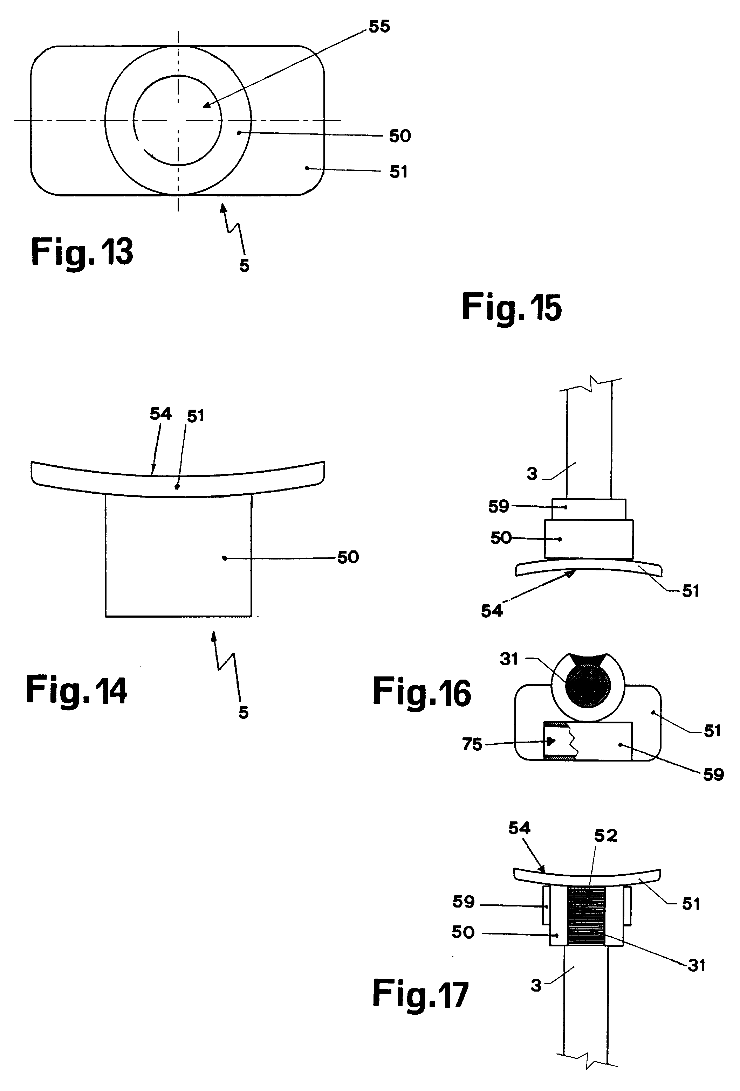

In particular, the housing seat (55) is defined by the concavity of a cylindrical or prismatic surface (or having a cross-section in the form of a curved or broken line, either open or closed). Practically, the inner portion (50) may have a substantially C-shaped cross-section, thereby forming a sort of longitudinally open cylinder, as can be seen more clearly in Figs. 3 and 8. In the example of Figs. 13 and 14, instead, such inner portion (50) is shaped like a closed cylinder.
The arms (3) may be fixed to the connection elements (5) in different ways. For example, the arms (3) may have their respective ends (31) complementarily shaped with respect to the seat (50) so as to allow for a mutual coupling thereof with mechanical shrinking. A mechanical coupling may also be obtained by causing the outer part of the first portion (50) to clamp the end (31) inserted therein, with consequent plastic deformation of the materials. Such clamping may be performed along two opposing longitudinal lines (56), as shown in Fig. 5, or along a groove of circumferential development (57), as shown in Fig. 7.

Alternatively, the arms (3) and the connection elements (5) may be joined either by spot welding or laser welding (in Figs. 4, 6 and 17, numeral (52) indicates the trace of the schematically represented laser weld) or by glueing with the use of suitable adhesives.
The outer portion (51) may be provided, in correspondence of its outer face opposite to the inner portion (50), with a retention strip (53) having an interaction surface (54) apt to be directly fixed to a tooth (4), for example by a so-called "direct bonding" technique, similarly to what is illustrated in Figs. 8 and 9.

Alternatively, such outer portion (51) may be fixed to an orthodontic band (6) by spot welding or other method.

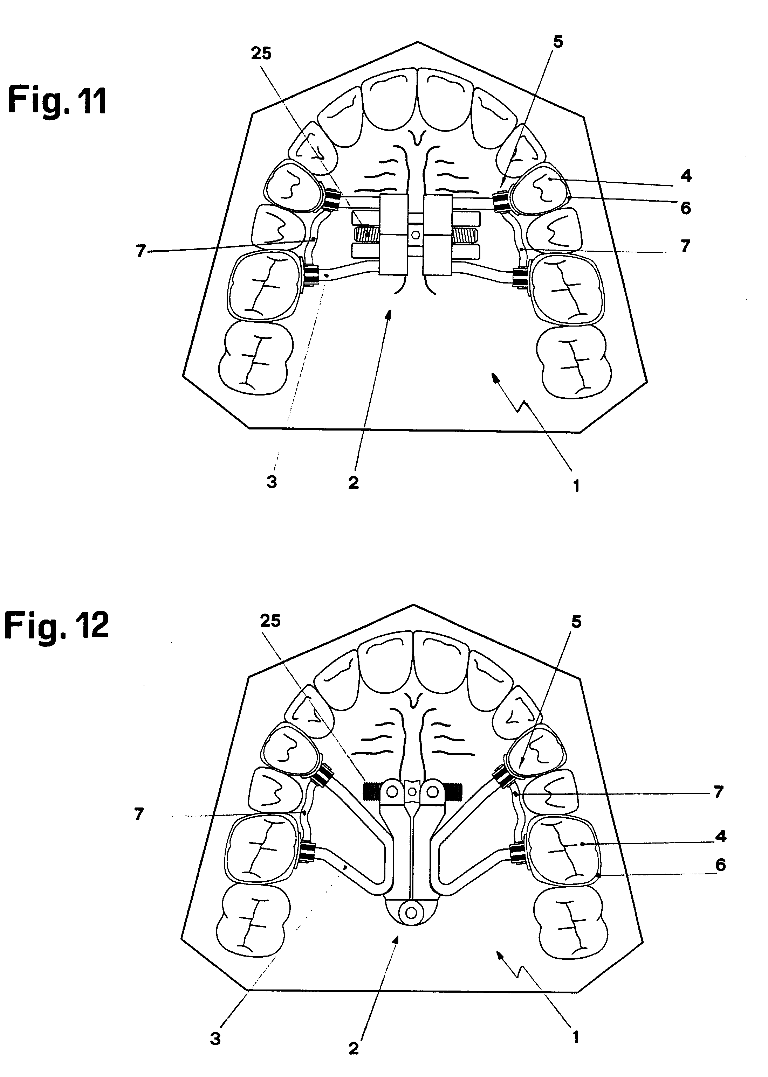

In Figs. 11, 12 and 15 to 17, the expander (1) is provided with two bridges (7) disposed between the arms (3) of a same side. Such bridges, according to the examples shown in the said figures, are connected to the connection elements (5) which, as can be seen more clearly in Figs. 15 to 17, are provided with fixing means consisting of a threaded bush (59) in the example.
The bush (59), which is disposed transversally under the inner portion (50), exhibits an internal cavity (75) complementarily shaped with respect to the bridges (7).
The fastening of the bush (59) to the bridge (7) may be carried out in a manner similar to that provided for fixing the internal portion (50) to the arm (3).

Moreover, the shape of the bush (59) or of the means for fixing the bridge (7), and the shape of the relevant cavity (75), may be made to vary according, for example, to the type of bridge (7) being used. Both the orthodontic expander (1) as a whole and the individual connection element (5) may be made of stainless steel or of titanium or other biocompatible material.

## Claims

1. Orthodontic expander of a type consisting of an element (2) with variable expansion and having at least two opposite arms (3) which are provided with relevant means for association thereof to the teeth (4) ; the associating means are formed by connection elements (5) able to be interposed between said arms (3) and said teeth (4) and exhibiting a first or inner portion (50) which defines a stable receiving seat (55) for a corresponding end (31) of each of said arms (3) and a second or outer portion (51) provided with a fixing surface (54) which is so shaped as to result associable to said teeth (4) either directly or indirectly through an orthodentic band (6) or other fixing means.

2. Expander according to claim 1, characterized in that said housing seat (55) is defined by the cavity of a cylindrical or prismatic surface.

3. Expander according to claim 1, characterized in that said inner portion (50) has a substantially C-shaped cross-section, that is, it is formed by a substantially cylindrical or prismatic body which is longitudinally open.

4. Expander according to claim 1, characterized in that said outer portion (51) is provided, on its external face opposite to said inner portion (50, with a retention strip (53) having an interaction surface (54) apt to be directly fixed to a tooth (4).

5. Expander according to claim 1, characterized in that said arms (3) are provided with respective ends (31) complementarily shaped with respect to the seat (50) so as to allow for a mutual coupling thereof by interference and/or mechanical shrinking.

6. Expander according to claim 1, characterized in that the ends (31) of said arms (3) are fixed to said seat (50) by spot welding.

7. Expander according to claim 1, characterized in that the ends (31) of said arms (3) are fixed to said seat (50) by laser welding.

8. Expander according to claim 1, characterized in that the ends (31) of said arms (3) are fixed to said seat (50) by adhesive means.

9. Expander according to claim 1, characterized in that said connection means (5) are provided with association means (59) able to fixedly constrain the same connection elements (5) to a bridge (7) disposed between said arms (3).

10. Expander according to claim 9, characterized in that said association means (59) consist of a bush (59) provided with a cavity (75) defining a seat for a corresponding end of said bridge (7).

11. Expander according to any of the preceding claims, characterized in that it is made of stainless steel.

12. Expander according to any of claims 1 to 10, characterized in that it is made of titanium.

13. Connection element apt to be used for defining an association means between an arm (3) of an orthodontic expander (1) and a tooth (4), characterized in that it is made up of a first or inner portion (50) which defines a stable receiving seat (55) for a corresponding end (31) of each of said arms (3) and a second or outer portion (51) provided with a fixing surface (54) which is so shaped as to result associable to said teeth (4) either directly or indirectly through an orthodentic band (6) or other fixing means.

14. Connection element according to claim 13, characterized in that said receiving seat (55) is defined by the concavity of a cylindrical or prismatic surface.

15. Connection element according to claim 13, characterized in that said inner portion (50) has a substantially C-shaped cross-section, that is, it is formed by a substantially cylindrical or prismatic body which is longitudinally open.

16. Connection element according to claim 13, characterized in that said outer portion (51) is provided, on its external face opposite to said inner portion (50, with a retention strip (53) having an interaction surface (54) apt to be directly fixed to a tooth (4).

17. Connection element according to claim 13, characterized in that said seat (50) exhibits an internal surface complementarily shaped with respect to said end (31) of said arm (3) so as to allow for a mutual coupling thereof by interference and/or mechanical shrinking.

18. Connection element according to claim 13, characterized in that it is provided with association means (59) able to fixedly constrain the same connection element (5) to a bridge (7) disposed between a pair of arms (3) of an expander.

19. Connection element according to claim 13, characterized in that said association means (59) consist of a bush (59) having a cavity (75) which defines a seat for a corresponding end of said bridge (7).

20. Connection element according to any of claims 13 to 19, characterized in that it is made of stainless steel.

21. Connection element according to any of claims 13 to 19, characterized in that it is made of titanium.
